# EUROPEAN PATENT SPECIFICATION

(11) **EP 4 350 869 B1**
(45) Date of publication and mention of the grant of the patent: **29.04.2026**
(21) Application number: 23824051.9
(22) Date of filing: 24.03.2023
(51) Int. Cl.: H01M 50/342, H01M 50/358, H01M 50/204

(54) **GAS VENTING DEVICE, AND BATTERY MODULE AND BATTERY PACK COMPRISING SAME**
ENTGASUNGSVORRICHTUNG UND BATTERIEMODUL UND BATTERIEPACK DAMIT
DISPOSITIF DE MISE À L'ÉVENT DU GAZ, ET MODULE DE BATTERIE ET BLOC-BATTERIE LE COMPRENANT

(30) Priority: 14.06.2022 KR 20220072178
(43) Date of publication of application: 10.04.2024
(73) Proprietor: LG Energy Solution, Ltd., Seoul 07335 (KR)
(72) Inventor: KIM, Doo Seung, Daejeon 34122 (KR); SIM, Il Suk, Daejeon 34122 (KR); CHOO, Yeon Chul, Daejeon 34122 (KR)
(74) Representative: Goddar, Heinz J.
(86) International application number: PCT/KR2023/003983
(87) International publication number: WO 2023/243821

(56) References cited:
- DE-A1- 102013 210 335
- JP-A- 2013 187 530
- KR-A- 20140 016 794
- KR-A- 20210 091 514
- KR-A- 20210 139 453
- US-A1- 2018 287 104
- SINGH JAGMIT, ZERPA LUIS E., PARTINGTON BENJAMIN, GAMBOA JOSE: "Effect of nozzle geometry on critical-subcritical flow transitions", HELIYON, ELSEVIER LTD, GB, vol. 5, no. 2, 20 February 2019 (2019-02-20), GB , pages e01273, XP093117629, ISSN: 2405-8440, DOI: 10.1016/j.heliyon.2019.e01273

## Description

### [Technical Field]

The present invention relates to a gas venting device for discharging gas inside a battery module or a battery pack.

In addition, the present invention relates to a battery module and a battery pack including the gas venting device.

This application claims the benefit of priority based on Korean Patent Application No. 10-2022-0072178 filed on June 14, 2022.

### [Background Technology of the Invention]

Battery packs applied to electric vehicles and the like have a structure in which a plurality of battery modules including a plurality of secondary batteries are connected in series or in parallel to obtain high output. In addition, the secondary batteries can be repeatedly charged and discharged by an electrochemical reaction between components including positive electrode and negative electrode current collectors, separators, active materials, electrolyte, and the like.

A secondary battery may generate gas from the inside thereof at any time while repeatedly charged and discharged, which is called venting gas. For example, when an overcurrent flows, a temperature of the secondary battery inside of the battery pack is rapidly increased. Such a rapid increase in temperature may cause a decomposition reaction of an electrolyte to generate gas. When the gas is generated from the secondary battery inside the battery pack, the gas may be collected inside the pack and the battery pack may explode, or the gas may be introduced into the interior of a vehicle or the like through a cooling duct of the battery pack or the like. Accordingly, a venting device capable of reducing the pressure in a battery pack by discharging gas inside the battery pack to the outside is provided in the battery pack.

Generally, a venting device has a structure in which a venting disk the can rupture according to internal pressure is inserted between an inlet through which gas inside a battery module or a battery pack is introduced and an outlet through which the gas is discharge.

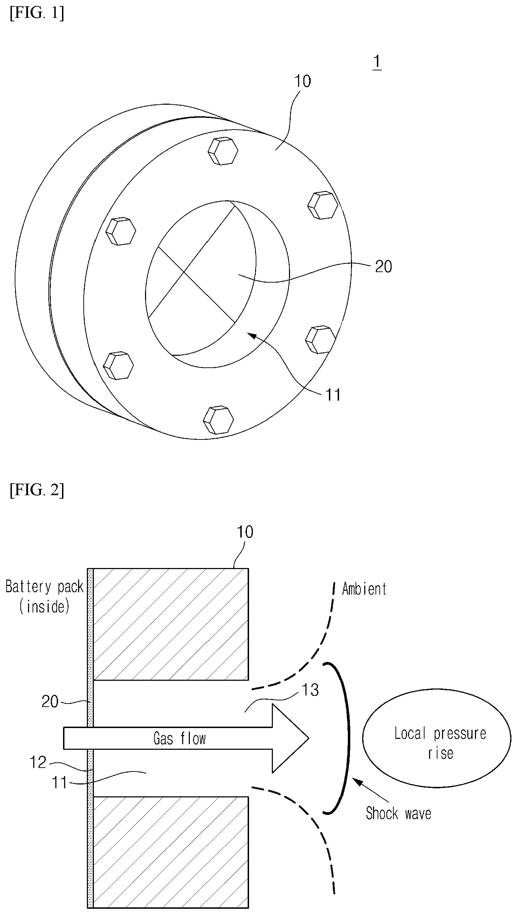

FIG. 1 is a perspective view illustrating an example of a conventional gas venting device, and FIG. 2 is a schematic view illustrating a gas flow situation at an outlet part of a conventional gas venting device.

As shown, the conventional gas venting device 1 has the advantage of being easy to design device, since the gas discharge flow path 11 of the bracket 10 connected to the venting disk 20 is simply designed as a cylinder.

However, as the conventional gas venting device 1 has a cylindrical-shaped structure simply connected to an inlet 12 and an outlet 13 of gas, the pressure difference between the inlet and outlet is not large, thereby limits the flow amount of gas that can be discharged.

In addition, when a large amount of gas is generated, a so-called choking phenomenon which causes the flow to stagnate can occur at the outlet of the gas discharge flow path 11, thereby increasing the flow instability. To avoid such choking phenomenon, it is necessary to select a venting disk that can rupture at a low pressure. However, considering the rupture pressure tolerances, it can be difficult to ensure component reliability of the venting disk in this case.

In addition, as shown in FIG. 2, in a gas venting device of a cylindrical flow path 11, there is a problem that a strong shock wave is generated near the outlet due to an unstable flow at the outlet and a sudden pressure change at the outlet, which impairs safety.

Furthermore, at the downstream of the shock wave, there is a local pressure increase, which causes the outlet pressure to rise again. This in turn reduces the inlet-outlet pressure difference, potentially reducing the rate of discharge.

[Related Art Document] Korean Laid-Open Patent No. 10-2018-0039986
DE 10 2013 210 335 A1 describes a safety valve for a lithium-ion cell. The safety valve is formed by a valve opening in a housing cover of the cell and a bursting membrane inserted into the valve opening. The bursting membrane tightly seals the lithium-ion cell at an internal cell pressure below a critical internal cell pressure and bursts at an internal cell pressure above the critical internal cell pressure and thus releases the valve opening of the safety valve and enables an outflow of a medium from the cell. Attached to the safety valve is a flow organ including a flow channel. The flow channel has a narrowed cross section between an inlet opening and an outlet opening.

US 2018 / 0 287 104 A1 describes a structure of a sealing body for a positive electrode terminal of a cylindrical battery. The sealing body includes a sealing plate having a generally planar surface. Annular upper and lower grooves are formed in upper and lower lower surfaces of the sealing plate 6a. The lower groove runs along the upper groove so as to overlap with the upper groove. A thin-walled portion in sealing plate is formed by a further narrowing of the lower groove. **In** a cross-sectional view, the upper and lower grooves seem to form a flow path having a narrowed cross section between the upper and lower lower surfaces of the sealing plate.

### [Description of the Invention]

### [Technical Problem]

An object of the present invention is directed to provide a gas venting device capable of discharging a larger flow amount per hour even with a venting disk having the same area, and a battery module and battery pack including the same.

In addition, an object of the present invention is directed to provide a gas venting device that can increase the rupture pressure of a venting disk by solving a choking phenomenon at an outlet part.

Further, the present invention aims to provide a gas venting device that prevents the generation of shock waves at an outlet of the flow path, thereby increasing safety and further improving flow stability.

### [Technical Solution]

The present invention is directed to providing a gas venting device including a hollow bracket member having a gas discharge flow path; and a venting disk coupled to the bracket member to shield the gas discharge flow path, and configured to rupture when a predetermined pressure is applied to the venting disk; wherein the gas discharge flow path includes a first flow path that continuously decreases in a cross-sectional area of the flow path along a gas discharge direction, and a second flow path formed consecutively with the first flow path and having a cross-sectional area of the flow path is continuously increased along the gas discharge direction. The venting disk is inserted across the throat portion of the gas discharge flow path, which is a boundary portion of the first flow path and the second flow path.

The first flow path and the second flow path may have the same or different lengths. As a specific example, the cross-sectional profiles of the both side portions of the first flow path may be formed in a tapered shape approaching each other in the gas discharge direction, and the cross-section profiles of both side portions of the second flow path may be formed in a tapered shape moving away from each other in the gas discharge direction.

A slope of the tapered shape of the first flow path and A slope of the tapered shape of the second flow path may be the same or different.

In addition, the cross-section profiles of both side portions of the first and second flow paths may be formed in a straight or curved tapered shape.

In this case, the first flow path has a first truncated conical shape in which the cross-sectional profiles of the two sides may be formed in a linear or curved tapered shape, and the second flow path has a second truncated conical shape in which the cross-section profiles of the two sides may be formed in a linear or curved tapered shape.

As another example, the first flow path has a first truncated pyramid shape in which the cross-sectional profiles of both side portions may be formed in a tapered shape, and the second flow path has a second truncated pyramid shape in which the cross-sectional profiles of both side portions may be formed in a tapered shape.

In this case, the first truncated pyramid and the second truncated pyramid may have a truncated square pyramid shape having a trapezoidal cross-sectional profile.

As an example, a flow path having a linear cross-sectional profile of both side portions may be connected to the inlet side of the first flow path.

As an example, the bracket member hash a through hole, and may include a discharge guide inserted within the through hole and having a gas discharge flow path formed therethrough.

As a specific example, the discharge guide may include a first discharge guide inserted into the through hole and having a first flow path formed through it, and a second discharge guide inserted into the through hole and having a second flow path formed through it, wherein the venting disk may be coupled between the first discharge guide and the second discharge guides to shield the gas discharge flow path.

A fastening portion may be formed on the outer peripheral surface of the discharge guide for fastening the discharge guide to the bracket member.

As an example, the bracket member includes: a first bracket located at the inlet side of the gas discharge flow path and having the first flow path, and a second bracket located at the outlet side of the gas discharge flow path and having the second flow path, wherein the venting disk is coupled between the first bracket and the second bracket to shield the gas discharge flow path.

As a more specific example, the first bracket and the second bracket each has a through hole, wherein a first discharge guide having a first flow path is inserted into the through hole of the first bracket, and a second discharge guide having a second flow path is inserted into the through hole of the second bracket.

Meanwhile, the venting disk includes a disk outer peripheral portion coupled to the bracket member; and a disk inner peripheral portion formed in one piece with the disk outer peripheral portion, shielding the gas discharge flow path, and rupturing when a predetermined pressure is applied to the disk inner peripheral portion; wherein a notch may be formed in the disk inner peripheral portion to rupture when the predetermined pressure is applied to the disk inner peripheral portion.

In addition, the present invention provides a battery module including the gas venting device.

The battery module includes a plurality of secondary batteries; and a module frame on which the plurality of secondary batteries are mounted, wherein the above-mentioned gas venting device may be coupled to one side of the module frame.

The present invention also provides a battery pack including the gas venting device.

The battery pack includes at least one battery module having a plurality of secondary batteries; and a battery pack case in which the battery module is mounted; wherein the above-mentioned gas venting device may be coupled to one side of the battery pack case.

### [Advantageous Effects]

According to a gas venting device according to the present invention and a battery module or battery pack including the same, a larger flow amount can be discharged per hour even when a venting disk having the same area is used, and thus the safety of the battery module and battery pack can be improved.

In addition, by being equipped with a unique gas discharge flow path form, relatively stable gas flow at an outlet part can be achieved by solving the choking phenomenon even when a large amount of venting gas is generated.

Further, the present invention has the advantage of allowing the rupture pressure of the venting disk to be set to be relatively high because the inlet and outlet pressure difference can be made large while avoiding the choking phenomenon.

Moreover, the discharged gas is discharged at high velocities, and such high-velocity inertia of the flow can prevent shock waves far from the outlet from being generated, or prevent the occurrence of shock waves.

Accordingly, the gas venting device of the present invention, and the battery module and battery pack including the same have the advantage of significantly improving safety even when an event such as heat propagation, etc. is generated.

### [Brief Description of the Diagrams]

FIG. 1 is a perspective view illustrating an example of a conventional gas venting device.
FIG. 2 is a schematic view illustrating a gas flow situation at an outlet part of a conventional gas venting device.
FIG. 3 is a diagram illustrating an exemplary embodiment of a gas venting device of the present invention.
FIG. 4 is a diagram illustrating a coupling structure of a venting disk and a bracket member in the gas venting device of FIG. 3.
FIG. 5 is a schematic diagram showing a gas flow situation at the outlet of the gas venting device of the present invention.
FIG. 6 is a diagram illustrating the shape of a flow path of a gas venting device according to an exemplary embodiment of the present invention.
FIG. 7 is a diagram illustrating the shape of a flow path of a gas venting device according to another exemplary embodiment of the present invention.
FIG. 8 is a diagram illustrating the shape of a flow path of a gas venting device according to another exemplary embodiment of the present invention.
FIG. 9 is a diagram illustrating a gas venting device according to another exemplary embodiment of the present invention.
FIG. 10 is a diagram illustrating a gas venting device according to another exemplary embodiment of the present invention.
FIG. 11 is a diagram illustrating a gas venting device according to another exemplary embodiment of the present invention.
FIG. 12 is a diagram illustrating a fastening structure of a gas venting device according to another exemplary embodiment of the present invention.
FIG. 13 is a perspective view illustrating the assembly structure of a gas venting device according to another exemplary embodiment of the present invention.
FIG. 14 is a schematic diagram illustrating the shape of a venting disk according to the present invention.
FIG. 15 is a schematic diagram illustrating a coupling structure of a gas venting device in a battery module according to an exemplary embodiment of the present invention.
FIG. 16 is a schematic diagram illustrating a coupling structure of a gas venting device in a battery module according to another exemplary embodiment of the present invention.

### (Reference numerals)

100, 200, 300, 400, 500, 600: Gas venting device
110: BRACKET MEMBER
110A: FIRST BRACKET
110B: SECOND BRACKET
111: GAS DISCHARGE FLOW PATH
111A: FIRST FLOW PATH
111B: SECOND FLOW PATH
111C: FIRST TRUNCATED CONE
111D: SECOND TRUNCATED CONE
111E: FIRST TRUNCATED PYRAMID
111F: SECONDTRUNCATED PYRAMID 112: Inlet
113: OUTLET
T: THROAT PORTION
S1,S2: SLOTS
115: LINEAR FLOW PATH
116: THREAD
120, 120': VENTING DISK
121: DISK OUTER PERIPHERAL PORTION
122: DISK INNER PERIPHERAL PORTION
123: FASTENING HOLE (BOLT THROUGH HOLE)
124: NOTCH
125: OUTER PERIPHERAL PORTION EXTENSION
130: DISCHARGE GUIDE
130A: FIRST DISCHARGE GUIDE
130B: SECOND DISCHARGE GUIDE
131: GAS DISCHARGE FLOW PATH
131A: FIRST FLOW PATH
131B: SECOND FLOW PATH
131C: FIRST TRUNCATED CONE
131D: SECOND TRUNCATED CONE
132: INLET
133: OUTLET
135: FASTENING PORTION
136: THREAD
140: FASTENING MEMBER
1000, 2000: BATTERY MODULES
1100, 2100: MODULE FRAMES

### [Best Mode for Carrying Out the Invention]

A gas venting device of the present invention as laid out in claim 1, includes: a hollow bracket member having a gas discharge flow path; and a venting disk coupled to the bracket member to shield the gas discharge flow path, and configured to rupture when a predetermined pressure is applied; wherein the gas discharge flow path includes: a first flow path that continuously decreases in a cross-sectional area of the flow path in the gas discharge direction, and a second flow path formed consecutively with the first flow path and having a cross-sectional area of the flow path that increases continuously along the gas discharge direction.

The present invention also provides a battery module including the gas venting device.

The battery module includes a plurality of secondary batteries; and a module frame on which the plurality of secondary batteries are mounted, wherein the above-mentioned gas venting device may be coupled to one side of the module frame.

In addition, the present invention provides a battery pack including the gas venting device.

The battery pack includes at least one battery module having a plurality of secondary batteries; and a battery pack case in which the battery module is mounted; wherein the above-mentioned gas venting device may be coupled to one side of the battery pack case.

### [Mode for Carrying Out the Invention]

Hereinafter, the present invention will be described in detail with reference to the accompanying drawings. Terms and words used in this specification and claims should not be construed as being limited to commonly used meanings or meanings in dictionaries and should be construed with meanings and concepts which are consistent with the technological scope of the present invention based on the principle that the inventors have appropriately defined concepts of terms in order to describe the present invention in the best way.

It should be understood that the terms "comprise," "comprising," "include," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof. In addition, when a layer, film, region, or plate is referred to as being "formed on" another element, it includes a case in which the layer, film, region, or plate is formed directly on an element and a case in which the layer, film, region, or plate is formed on the element with another element interposed therebetween. In contrast, when a layer, film, region, or plate is referred to as being "formed below" an element, it includes a case in which the layer, film, region, or plate is formed directly below the element and a case in which the layer, film, region, or plate is formed below the element with another element interposed therebetween. In addition, in the present invention, when a member is referred to as being located "on" another member, it includes a case in which a member is disposed above another member and a case in which a member is disposed below another member.

Hereinafter, the present invention will be described in detail.

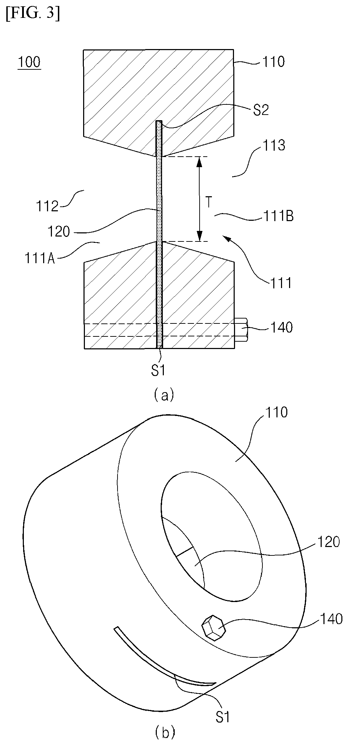

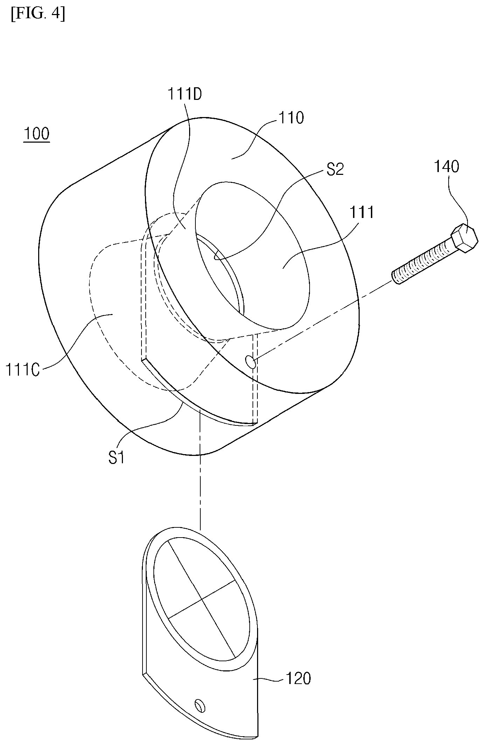

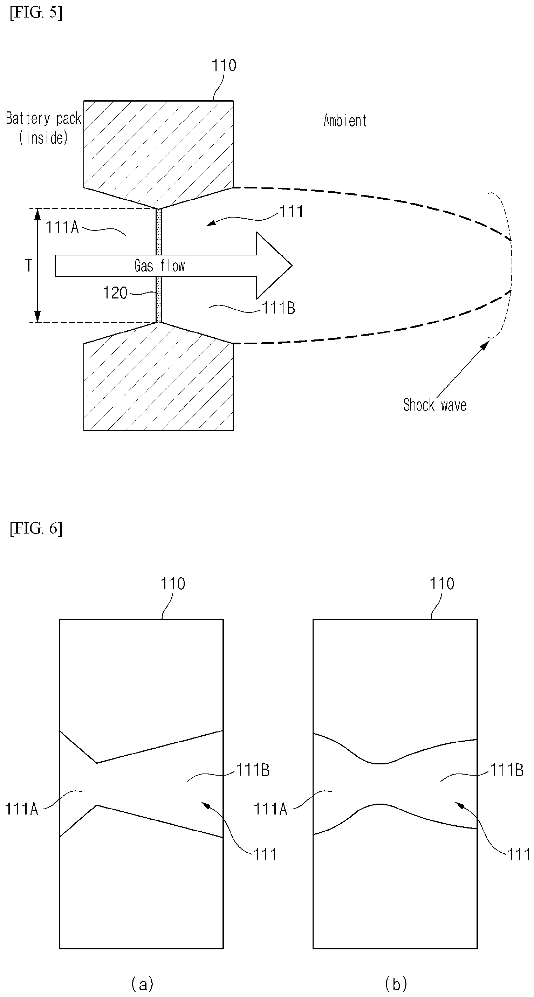

FIG. 3 is a diagram illustrating an exemplary embodiment of a gas venting device of the present invention, FIG. 4 is a diagram illustrating of a coupling structure of a venting disk and a bracket member in the gas venting device of FIG. 3, and FIG. 5 is a schematic illustration of a gas flow situation at the outlet of the gas venting device of the present invention.

A gas venting device 100 according to the present invention is defined in claim 1 and includes: a hollow bracket member 110 having a gas discharge flow path 111; and a venting disk 120 coupled to the bracket member 110 to shield the gas discharge flow path 111, and configured to rupture when a predetermined pressure is applied; wherein the gas discharge flow path 111 includes: a first flow path 111A that continuously decreases in a cross-sectional area of the flow path along the gas discharge direction, and a second flow path 111B formed consecutively with the first flow path and having a cross-sectional area of the flow path that increases continuously along the gas discharge direction.

Referring to FIGS. 3 and 4, the gas venting device 100 according to the invention includes a hollow bracket member 110 having a gas discharge flow path, and a venting disk 120 coupled to the bracket member and configured to shield the gas discharge flow path and to rupture when a predetermined pressure is applied. FIG. 3(a) is a schematic cross-sectional view of the gas venting device 100, and FIG. 3(b) is a perspective view of the gas venting device 100.

The bracket member 110 formed in a hollow shape, such that the hollow (through hole) space may directly form a gas discharge flow path, or as described below, another member with a gas discharge flow path (e.g., a discharge guide) may be positioned within the hollow space. In the embodiment of FIG. 3 and FIG. 4, the bracket member 110 has a through hole at its approximate central portion, wherein the through hole forms a gas discharge flow path 111.

The bracket member 110 is provided with a venting disk 120 that shields the gas discharge flow path. The venting disk 120 is formed of a rupturable material such that it ruptures when a predetermined pressure is applied. For example, it may be formed of a rupturable metal or plastic material. Alternatively, it may be made of a polymeric material possible to slimming, such as a vinyl, film, or the like. Meanwhile, the venting disk may be provided with a notch in the area corresponding to the flow path to facilitate rupture.

The predetermined pressure may be determined by considering the design of the battery cells within the battery module or battery pack and the degree of safety required. For example, the venting disk 120 may be designed to rupture in the event of a flame within the module or pack or in the event that it exceeds a set high temperature and pressure. Alternatively, for increased safety, the venting disk may be designed to rupture at a relatively low set pressure, which is the pressure before an internal explosion occurs.

The venting disk 120 is coupled to the bracket member 110 by being positioned on the gas discharge flow path in order to shield the gas discharge flow path 111.

The gas discharge flow path 111 includes a first flow path 111A having a cross-sectional area of the flow path continuously or sequentially decreasing along the gas discharge direction, and a second flow path 111B formed consecutively at the first flow path and having a flow path cross-sectional area continuously or sequentially increasing along the gas discharge direction. Thus, by forming two flow paths with different flow path cross-sections in succession, the present invention can discharge a large amount of gas by increasing the outlet flow rate while eliminating the choking phenomenon as described below, and can improve flow stability by preventing the occurrence of shock waves.

In general, a battery pack is equipped with a plurality of battery modules, each of which contains a plurality of secondary batteries. These secondary batteries generate gas due to the decomposition reaction of the electrolyte as they are repeatedly charged and discharged. The heat generated during the charging and discharging process of the battery cells promotes the generation of gas, which expands and increases the pressure inside the battery module or battery pack. If this process continues, the battery module or battery pack may explode, or the gas inside may enter the interior of a vehicle or the like through a duct, so a venting device is attached to discharge the gas by rupture the venting disk when the pressure of the gas reaches a predetermined limit.

As described above, conventional gas venting devices simply have a cylindrical-shaped gas discharge flow path with a gas inlet and outlet connected to it, so the pressure difference between the inlet and outlet is not large, thereby limits the flow amount of gas that can be discharged.

In this regard, the gas discharge flow path 111 of the present invention has a first flow path 111A which flow path cross-sectional area decreases continuously or sequentially along the gas discharge direction, and a second flow path 111B formed consecutively with the first flow path and which flow path cross-sectional area increases continuously or sequentially along the gas discharge direction.

As shown in FIG. 5, when the cross-sectional area of the first flow path 111A of the gas discharge flow path decreases, the internal pressure increases as the velocity of the gas decreases at the inlet 112 of the first flow path with a large cross-sectional area, and the internal pressure decreases as the velocity of the gas increases at the outlet of the first flow path with a small cross-sectional area. As a result, the pressure difference between the inlet and outlet of the first flow path 111A is locally increased, and a larger flow rate of gas can be discharged even if a venting disk of the same area is used. Accordingly, when the internal pressure caused by the gas generated inside the battery module or battery pack exceeds the standard value, the safety of the battery module and the battery pack can be improved by quickly discharging the gas. In other words, the first flow path 111A having a reduced cross-sectional area of the present invention can increase the gas discharge flow rate by increasing the pressure difference between the inlet and outlet, compared to the conventional cylindrical flow path.

Meanwhile, in addition to the conventional cylindrical flow path, a so-called choking phenomenon can also occur in the case of a flow path in which cross-sectional area is reduced as shown in the first flow path. As mentioned above, in order to discharge a large amount of gas, a larger pressure difference between the inlet and outlet of the flow path is advantageous. However, regardless of how large the pressure difference between the inlet and outlet is designed, the maximum gas flow rate that can be reached at the outlet of a reduced cross-sectional area flow path such as the first flow path is limited to the speed of sound (M=1). That is, in the subsonic region, where the gas flow rate is below the speed of sound, the gas is considered a so-called incompressible gas and the gas flow rate increases as the cross-sectional area of the gas discharge flow path decreases. However, in the case of subsonic flow, regardless of how large the pressure difference is, the gas flow rate at the outlet of the flow path cannot exceed the speed of sound based on the laws of physics.

For this reason, even if the pressure difference between the inlet and outlet is kept increasing, after the point at which the outlet flow rate reaches the speed of sound, a so-called choking phenomenon in which the flow rate and flow of the gas at the outlet is stagnated can occur.

In order to solve this choking phenomenon and further increase the outlet flow rate, the present invention has a second flow path 111B with an increased flow path cross-sectional area.

If the flow rate at the outlet of the first flow path 111A reaches the speed of sound and the cross-sectional area of the flow path is increased again, such as in the second flow path 111B, the gas exhibits the behavior of a so-called compressible gas, and unlike the first flow path, flows at supersonic speeds with the flow rate increasing with the cross-sectional area of the flow path. In other words, the gas flow rate that was stagnant at the outlet of the first flow path 111A is further increased by the increase in cross-sectional area in the second flow path 111B and flows at speeds exceeding the speed of sound. Therefore, by forming a first flow path with a decreasing cross-sectional area and a second flow path with an increasing cross-sectional area in succession, the present invention can solve the choking and finally increase the gas flow rate at the outlet of the gas discharge flow path, i.e., the outlet 113 of the second flow path, so that a large amount of gas can be discharged.

In addition, the present invention has the advantage of mitigating or eliminating the occurrence of shock waves as in the prior art.

Referring to FIG. 2, in a conventional gas discharge flow path, the gas flow rate at the outlet is not high, thereby generating a shock wave near the outlet. The shock wave is an irreversible loss of flow energy and is accompanied by a sharp increase in pressure at the outlet rear. This increase in pressure at the outlet consequently reduces the inlet-outlet pressure difference, thereby hindering gas discharge.

On the other hand, as shown in FIG. 5, in the case of the present invention equipped with two flow paths of decreasing and increasing cross-sectional area, the outlet flow rate is very large, reaching supersonic speeds, and the inertia of the flow at such high speeds causes shock waves to occur far from the outlet 113. In light of the recent dangers of battery ignition and explosion, it is important to design the flow path so that these shock waves are avoided within the region of interest of the flow. The present invention provides for a first and second flow path with different cross-sections, so that shock waves can be formed far away from the outlet. Furthermore, since the flow energy of the gas is lost in this process, the intensity of the resulting shock wave is much smaller, as shown by the dotted line in FIG. 5, or in some cases, it may dissipate to the atmosphere without generating a shock wave.

Accordingly, the present invention does not cause a localized pressure to increase at the outlet as in the prior art.

In conclusion, according to the present invention, it is possible to overcome the choking phenomenon and discharge a large amount of gas by increasing the pressure difference between the inlet 112 and the outlet 113 of the gas discharge flow path 111, while obtaining a relatively stable gas flow without generating a shock wave at the outlet and improving safety.

Moreover, the rupture pressure of the venting disk can also be set to be relatively high because the pressure difference can be large.

The shape, length, cross-sectional area size, cross-sectional area change rate, etc. of the first flow path and the second flow path constituting the gas discharge flow path of the present invention can be appropriately changed and selected according to the design specifications such as the type, number, and arrangement structure of the secondary battery installed in the battery module and the battery pack. In other words, depending on the design specifications of the secondary battery, the heat transfer situation, flame occurrence situation, temperature, and pressure occurring in the battery module or pack will vary. In addition, the number of battery modules installed in the battery pack and the arrangement structure need to be considered.

Thus, various specifications of the gas discharge flow path of the present invention, such as shape, length, cross-sectional area, and the like, can be determined by considering the various parameters described above.

The shape, length, cross-sectional area size, and cross-sectional area change rate, etc. of these gas discharge flow paths will be described later.

Meanwhile, the venting disk 120 is installed in the gas discharge flow path 111 of the bracket member 110 so as to shield the gas discharge flow path 111. In theory, the venting disk 120 can be installed in any part of the path of the first and second flow paths. In practice, the venting disk can be installed at the most appropriate location by considering the pressure or flow rate, cross-sectional area, flow path shape, and easy of installation, etc. depending on the location of the gas discharge flow path.

According to the invention, as shown in FIG. 3 to FIG. 5, the venting disk 120 is installed in a throat portion T, which is the boundary portion between the first flow path 111A and the second flow path 111B.

The throat portion T forms the cross-sectional area where the subsonic behavior changes to supersonic behavior, thereby it is necessary to determine the cross-sectional area of this throat portion preferentially when designing the flow path. If the venting disk 120 is installed in the throat portion, the area of the venting disk and the rupture pressure range can be designed relatively accurately by considering the cross-sectional area at the throat portion. In particular, the flow in the throat portion T is stable compared to the inlet 112 and outlet 113 of the gas discharge flow path, and the design is based on such a stable portion, so it is advantageous that the design accuracy of the venting disk 120 can be further improved.

In addition, there is less pressure variation before and after the throat portion T, so there is less possibility of unintentionally breaking the venting disk before it reaches the set pressure.

In an embodiment not falling within the wording of the claims, the venting disk 120 can be installed at the inlet side of the gas discharge flow path, that is, at the inlet 112 of the first flow path 111A. Installing it on the "inlet side" includes both installing it at the inlet 112 of the first flow path 111A forming the gas discharge flow path 111 and installing it on a portion adjacent to the inlet. Furthermore, it includes the case of installing the venting disk 120 in an additional flow path when the additional flow path is formed inside the gas venting device 100 that precedes the first flow path 111A.

In this case, it can effectively protect the venting disk from external pressure. It is also useful for protecting critical components such as secondary battery components and module components inside the venting disk.

In addition, if only the shape of the throat portion described above is determined for the flow path shape, the total flow rate is not highly dependent on the size of the inlet, so it is easy to select the specification of the venting disk installed at the inlet of the gas discharge flow path. In other words, if the shape of the throat portion and the flow path is determined within the range that can achieve the effect of increasing the flow rate due to pressure changes at the inlet and outlet, the area of the inlet and the size of the venting disk installed therein can be designed appropriately. Therefore, installing a venting disk at the inlet has the advantage of providing greater design freedom.

In an additional embodiment not falling within the wording of the claims, the venting disk 120 can be installed at the outlet of the gas discharge flow path, that is, at the outlet 113 side of the second flow path 111B.

If the venting disk is installed at the inlet of the flow path or in the throat portion, if it ruptures, the rupture pieces can block the flow path or flow into the module and cause interference. This can impair the flow stability of the flow path. Installing the venting disk at the outlet of the flow path reduces this risk and contributes to flow stability.

Since the venting disk is located on the outlet side of the flow path 113, there are no obstructions in the flow path from the inlet to the outlet side. As a result, since the flow path is connected to the outside after the gas flow in the gas discharge flow path becomes fully developed, this further improves the flow stability of the flow path, thereby enables a stable venting of the discharging gas.

As described above, the venting disk 120 can be installed at the inlet of the first flow path (inlet 112 of the gas discharge flow path), at the outlet of the second flow path (outlet 113 of the gas discharge flow path), or at the throat portion T, which is a boundary portion between the outlet of the first flow path and the inlet of the second flow path. Furthermore, of course, depending on the flow path design, the venting disk can be installed in other locations.

However, as described above, installing the venting disk at the inlet, outlet, or throat portion of the first flow path has its own advantages. In terms of ease of coupling of the venting disk 120 to the bracket member 110, it is preferable to install the venting disk at the inlet or outlet side of the gas discharge flow path. That is, by placing the venting disk 120 at the inlet or outlet side of the gas discharge flow path, the gas venting device can be easily assembled, for example, by contacting the venting disk with the corresponding mating surface of the bracket member 110 and fastening it with a fastening member.

On the other hand, as shown in FIGS. 3 and 4, when the bracket member is coupled so that the venting disk is located in the throat portion T, it is necessary to separately process the shape of the bracket member or the gas discharge flow path in order to provide a place for the venting disk to be coupled. For example, as shown in FIGS. 3 and 4, the body of the bracket member 110 may be formed with slots S1,S2 into which the venting disk 120 is inserted. In this case, it is necessary to form an additional slot (insertion groove) S2 on the inner surface of the throat portion of the gas discharge flow path 111 of the bracket member 110 so that the venting disk 120 can be inserted. A portion of the venting disk 120 may be inserted and fixed in the insertion groove S2 across the throat portion of the gas discharge flow path. Subsequently, the venting disk 120 may be fixed to the bracket member 110 by means of a fastening member 140. As shown in the embodiments of FIGS. 3 and 4, coupling the venting disk with the throat portion may have the disadvantage of requiring a rather complicated processing of the shape or structure of the bracket member, as described above.

However, if the venting disk is installed in the throat portion, as described above, it has the advantage of improving the design accuracy of the venting disk. Also, since the pressure variation at the throat portion is not large, there is less possibility of the venting disk unintentionally breaking before the set pressure is reached.

In this way, considering the effect of installing the venting disk in the throat portion, a gas venting device of the structure shown in FIGS. 3 and 4 can be adopted, even if it is rather difficult to process.

Furthermore, as will be described later, if a bracket member or a discharge guide inserted into the bracket member is configured in plurality, and if a venting disk is fastened between the plurality of bracket members or the plurality of discharge guides, there is no need to process a bracket member in a complicated way.

The following describes an example of a gas venting device in which a venting disk is installed in a throat portion.

The length, shape, cross-sectional area size, and cross-sectional area change rate of the first flow path and the second flow path can be designed appropriately in consideration of the design specifications of the secondary battery, battery module, and battery pack, required safety, gas flow stability, etc.

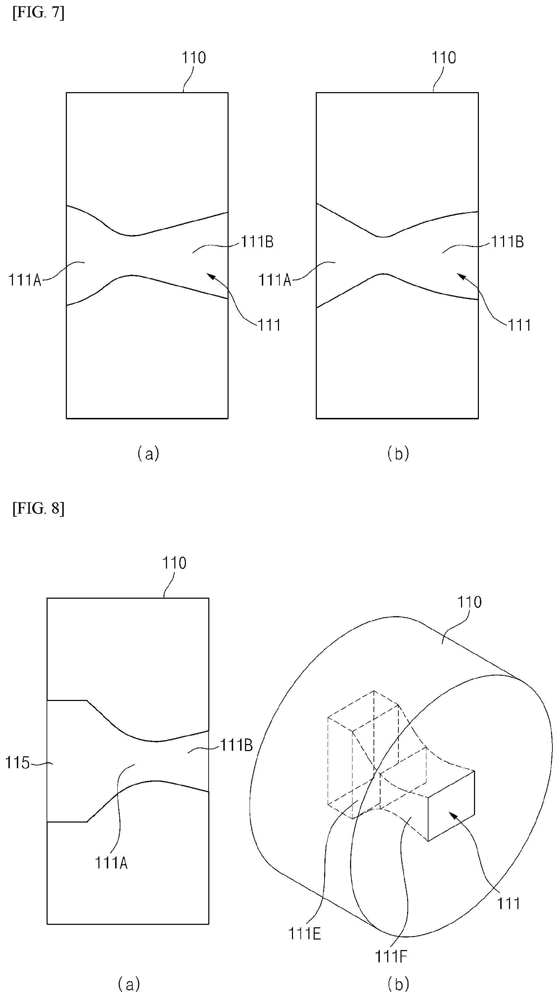

FIGS. 6 through 8 are diagrams illustrating flow path shapes of gas venting devices according to various examples of the present invention. FIG. 6(a) illustrates a flow path with linear cross-sectional profiles on both sides, and FIG. 6(b) illustrates a flow path with curved cross-sectional profiles on both sides. FIG. 7(a) illustrates a flow path with curved and linear cross-sectional profiles on both sides, and FIG. 7(b) illustrates a flow path with linear and curved cross-sectional profiles on both sides. FIG. 8(a) illustrates a flow path having a trapezoidal cross-sectional profile on both sides of the flow path, and FIG. 8(b) is a schematic perspective view of a three-dimensional shape of the flow path, which has a truncated pyramid shape.

The length of the overall gas discharge flow path, or the length of the first and second flow paths, can be determined by considering the gas discharge pressure, the flow path cross-sectional area, the size of the module or the pack, etc.

For example, as shown in FIGS. 3 and 4, the first and second flow paths can be configured to have the same length. This is applicable when the change in gas flow rate is relatively simple, and makes it easy to process the bracket member.

However, it is also possible to vary the length of the first flow path 111A and the second flow path 111B, as shown in FIGS. 6 to 8. In particular, it is possible to shorten the length of the first flow path 111A in the subsonic region and lengthen the length of the second flow path 111B in the supersonic region. By shortening the first flow path and lengthening the second flow path, the choking of the throat portion can be quickly solved, and gas can be discharged from the outlet while the supersonic flow of the second flow path is sufficiently developed. By increasing the flow inertia of the discharging gas, the shock wave generating region can be formed further away from the outlet 113.

The first flow path 111A has a flow path cross-sectional area that decreases continuously along the gas discharge direction. In consideration of the case where the cross-sectional area of the flow path decreases continuously, the cross-sectional profiles of the two side portions of the first flow path 111A form a tapered shape that approaches each other in the gas discharge direction. Here, the two side portions of the flow path refer to the side portions on either side forming the inner wall of the flow path, not the inlet and outlet sides forming the upper and lower portions of the flow path.

In addition, when the cross-sectional area of the second flow path 111B increases continuously along the gas discharge direction, the cross-sectional profiles of the two side portions of the second flow path 111B form a tapered shape that moves away from each other toward the gas discharge direction.

In addition to the length of the first and second flow paths, the slope of the tapered profile of the cross-sectional profiles of the both side portions can also be determined differently depending on the design goal. That is, if the flow change is relatively simple or if the venting path is short, the slope of the tapered shape of the first and second flow paths can be set to be the same, as shown in FIGS. 3 and 4. On the other hand, if the flow change is complex, the slope of the tapered shape of the first flow path can be made larger than the slope of the tapered shape of the second flow path from the perspective of preventing choking and shock waves, as shown in FIGS. 6 and 7.

Meanwhile, the cross-sectional profiles of the both side portions are not limited to a linear tapered shape, but may include a curved tapered shape. For example, as shown in FIG. 6(a), the cross-sectional profiles of the first and second flow paths may be all linear tapered shape, or as shown in FIG. 6(b), they may be all curved tapered shape. Alternatively, the cross-sectional profile of the both side portions of the first and second flow paths may be a mixture of linear and curved lines. That is, the cross-sectional profile of the first flow path may be curved and the cross-sectional profile of the second flow path may be linear, as shown in FIG. 7(a). Alternatively, the cross-sectional profiles of the first and second flow paths may be straight-curved, as shown in FIG. 7(b).

Furthermore, the cross-sectional profile may be composed of a partial mixture of linear and curved lines within each of the first and second flow paths. Importantly, the cross-sectional area condition of the overall flow path must satisfy a continuous decrease (first flow path) and increase (second flow path).

In addition, the curvature of the curve can be set differently for each flow path, or even within a single flow path, along the gas discharge direction. For example, the curved tapered flow path of FIGS. 6 and 7 has a concave curved shape from the center of the flow path toward the flow path inner wall, but it is also possible to configure a curved flow path with a convex protruding shape from the flow path inner wall toward the center of the flow path.

In this way, configuring the cross-sectional profile of the both side portions of the flow path with a mixture of linear and curved lines, or with different curvatures of the lines, has the following effects:
For example, if the cross-sectional profile of the flow path is only linear, it is easy to manufacture because of its simplicity, but when connected to other parts such as pipes, an angled part may occur on the wall of the flow path, causing some flow instability. In addition, since the cross-sectional area reduction rate is constant, if a gas with unstable flow is introduced, for example, at the inlet of the flow path, the unstable flow of the gas is not likely to be solved and maintained until the outlet of the flow path. In other words, a flow path with a constant cross-sectional area decrease or increase rate has a disadvantage of having less freedom to control the flow instability within the flow path.

In this regard, it is advantageous that the flow instability described above can be controlled or managed within the flow path if the cross-sectional area reduction rate varies along the flow path (e.g., the cross-sectional profile of the both side portions is a mixture of linear and curved lines, or the curvature of the curves is different). In other words, if the shape of the first and second flow paths 111A, 111B or the profiles of the both side portions are different as shown in FIG. 7, for example, even if the flow in the first flow path is unstable, the flow can be stabilized by appropriately designing the shape of the second flow path. In this way, by designing different shapes of the first and second flow paths, or by designing different shapes or different cross-sectional profiles within a single flow path, the gas flow within the flow path can be adjusted, thereby increasing the design freedom for controlling flow stability.

Furthermore, as described above, the length of the first and second flow paths, as well as the slope of the tapered shape, can be adjusted to further increase the design freedom for controlling flow stability.

Meanwhile, the gas discharge flow path 111 may be designed to have the shape of the cross-section perpendicular to the gas discharge direction to be circular, as shown in FIG. 4. In this case, the three-dimensional shape of the gas discharge flow path 111 may be a truncated cone shape. Accordingly, the shapes of the inlet 112 and outlet 113 of the gas discharge flow path 111 are circular, and constitute the lower and upper surfaces of the truncated cone shape, respectively.

Here, the first flow path 111A of the gas discharge flow path 111 has a first truncated cone shape 111C, wherein the cross-sectional profiles of the both side portions are formed in a linear or curved tapered shape. In addition, the second flow path 111B has a second truncated cone shape 111D, wherein the cross-sectional profiles of the both side portions are formed in a linear or curved tapered shape.

Specifically, the gas discharge flow path of FIG. 6 has a linear or curved cross-sectional profile on the outer peripheral surface of the first and second truncated cone shapes 111C, 111D forming the first and second flow paths, respectively.

In addition, in the gas discharge flow path of FIG. 7, the outer peripheral surface of the first truncated cone 111C shape forming the first flow path has a curved (FIG. 7(a)) or linear (FIG. 7(b)) cross-sectional profile, and the outer peripheral surface of the second truncated cone 111D shape forming the second flow path has a linear (FIG. 7(a)) or curved (FIG. 7(b)) cross-sectional profile.

By changing or mixing the cross-sectional profiles of the first and second truncated cone shapes, the flow stability as described above can be more effectively controlled.

In FIGS. 3 through 7, the cross-sectional shape perpendicular to the gas discharge direction is circular, with the first and second flow paths each forming a truncated cone shape. However, the cross-sectional shape is not limited to a circular shape and may have a rectangular cross-sectional shape as shown in FIG. 8.

In other words, to the extent that the conditions of decreasing and increasing the cross-sectional area of the first flow path and the second flow path, respectively, are satisfied, it is also possible to adopt a flow path having a rectangular cross-sectional shape in the direction perpendicular to the gas discharge flow path 111, as shown in FIG. 8. Referring to FIG. 8, the first flow path 111A has a first truncated pyramid 111E shape with a tapered cross-sectional profile on both sides, and the second flow path 111B has a second truncated pyramid 111F shape with a tapered cross-sectional profile on both sides. In the gas discharge flow path of FIG. 8, the first truncated pyramid 111E and the second truncated pyramid 111F have a trapezoidal cross-sectional profile on both side portions of the flow path.

A gas discharge flow path having such a rectangular cross-sectional shape can also be appropriately employed for design purposes or for adjustment of flow stability. As such, a flow path having a rectangular (square) rather than a circular cross-sectional shape perpendicular to the gas discharge direction, i.e., a flow path in which the three-dimensional shape of the flow path forms a truncated pyramid, is applicable not only to FIG. 8 but also to flow paths having a cross-sectional profile of both side portions of the same shape as FIGS. 6 and 7.

In addition, as shown in FIG. 8, a linear flow path 115 can be further formed on the inner side of the gas discharge flow path 111, that is, on the inner side of the first flow path 111A, if necessary. When the linear flow path 115 is added in this way, the flux flow inside the gas venting device 100 can be stably directed to the first flow path 111A. Furthermore, in the case of a bracket member 110 including a linear flow path 115, it may be advantageous in terms of processibility, as it is easy to introduce a tool for processing the flow path into the interior of the bracket member 110. The linear flow path 115 is rectangular in cross-sectional shape perpendicular to the gas discharge direction, but a circular flow path, that is, a flow path having a cylindrical shape in three dimensions, is also possible.

Such a linear flow path 115 can be applied to the inlet side of the truncated cone flow paths of FIGS. 3 through 7, in addition to the truncated pyramid flow paths shown in FIG. 8.

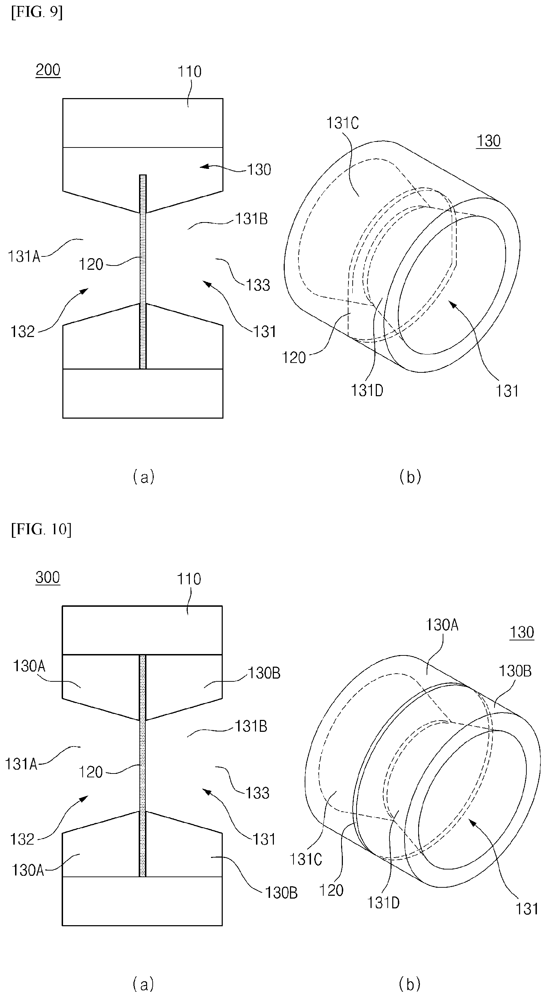

FIG. 9 is a diagram of a gas venting device 200 according to another exemplary embodiment of the present invention, wherein FIG. 9(a) is a schematic cross-sectional view and FIG. 9(b) is a schematic perspective view of a discharge guide 130, which is a component of the gas venting device.

In FIGS. 3 through 8, a through hole itself of the bracket member 110 is formed as a gas discharge flow path 111 including a first flow path and a second flow path.

However, in this case, it is difficult to easily change the flow path shape according to changes in product specifications, and in order to change the flow path, it is inconvenient in that the bracket member itself has to be replaced with a bracket member with a different flow path shape.

In the embodiment of FIG. 9, the purpose of the present invention is achieved by inserting a venting guide 130 having a gas discharge flow path 131 formed through the through hole of the bracket member 110. That is, in this embodiment, gas discharge flow paths including the first and second flow paths are formed through the venting guide 130, and a venting disk 120 is coupled to the gas discharge flow path 131 of the venting guide 130 while coupling the venting guide 130 to the through hole of the bracket member 110. As shown in FIG. 9, the gas discharge flow path 131 of the discharge guide is formed in the form in which a first flow path 131A in the shape of a first truncated cone 131C shape and a second flow path 131B in the shape of a second truncated cone 131D shape, with the directions of the tapered cross-sectional profile of the two sides are opposite to each other, are formed in succession.

The discharge guide 130 is a removable or replaceable structure. As such, in the present embodiment, the bracket member 110 is provided with a separate discharge guide 130 having a gas discharge flow path 131 to facilitate the discharge of gases, allow for easy replacement of parts, and make it easy to change the shape of the flow path.

In this embodiment, the venting disk 120 is coupled to the discharge guide 130, and the discharge guide 130 is coupled to the bracket member 110, resulting in the venting disk 120 being coupled to the bracket member 110. Similar to the bracket member of FIGS. 3 and 4, in order to couple the venting disk to the discharge guide, the discharge guide may also be formed with slots into which the venting disk can be inserted.

In this case, the description of the length, slope, and shape of the gas discharge flow path 111 described above with reference to FIGS. 4 to 8 is equally applicable to the case of the gas discharge flow path 131 of the discharge guide 130.

FIG. 10 is a diagram of a gas venting device 300 according to yet another exemplary embodiment of the present invention, wherein FIG. 10(a) is a schematic cross-sectional view and FIG. 10(b) is a schematic perspective view of a discharge guide 130, which is a component of the gas venting device.

In the embodiment of FIG. 10, two venting guides 130A,130B each having first and second flow paths 131A,131B are installed in a single bracket member 110. That is, the discharge guide 130 include a first discharge guide 130A inserted into a through hole of the bracket member and having a first flow path 131A formed through it, and a second discharge guide 130B inserted into the through hole and having a second flow path 131B formed through it. At this time, the venting disk 120 is coupled between the first discharge guide 130A and the second discharge guide 130B to shield the gas discharge flow path 131. In this embodiment, since the discharge guide 130 is composed of two discharge guides with different shapes of the flow paths, the shape of each discharge guide is simplified to facilitate the processing of each guide. In addition, the outer circumference of the venting disk 120 can be inserted between the two discharge guides. Because of this, as in the embodiment of FIG. 9, it is not necessary to process a slot for inserting the venting disk 120 into the discharge guide 130. Furthermore, as the venting disk is coupled between the first discharge guide 130A and the second discharge guide 130B, a larger coupling area can be secured between the venting disk and the discharge guide to increase the coupling force.

In FIG. 10, the first discharge guide 130A has a first flow path 131A with a first truncated cone 131C shape, and the second discharge guide 130B has a second flow path 131B with a second truncated cone 131D shape. In FIG. 9, the first and second truncated cones form an integrally formed gas discharge flow path 131. On the other hand, in FIG. 10, the first and second truncated cones form a segmented gas discharge flow path 131. The venting disk 120 is installed in the gas discharge flow path corresponding to the area between the first and second truncated cone , i.e., the throat portion.

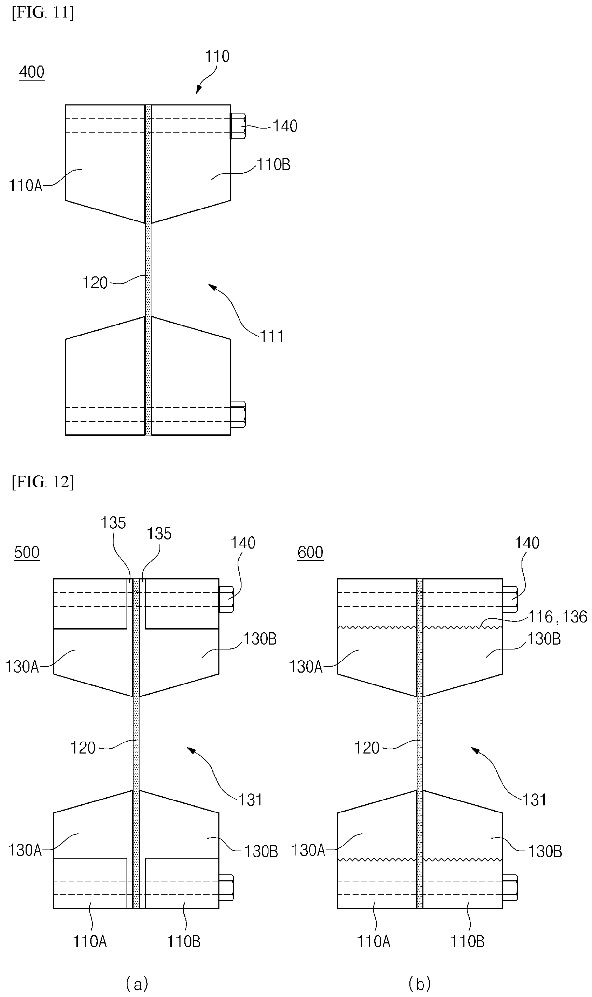

FIG. 11 is a diagram of a gas venting device 400, according to yet another exemplary embodiment of the present invention.

In order to facilitate coupling of the venting disk 120 to the bracket member 110, the present embodiment is configured by splitting the bracket member in two. That is, the bracket member includes a first bracket 110A located at the inlet 112 side of the gas discharge flow path and having a first flow path 111A, and a second bracket 110B located at the outlet 113 side of the gas discharge flow path 111 and having a second flow path 111B. Then, by positioning the venting disk between the first bracket 110A and said second bracket 110B, and fastening the first and second brackets and the venting disk 120 with a fastening member 140, the venting disk can be easily coupled to the bracket member. In this case, the venting disk 120 is positioned between the first and second brackets 110A, 110B, and is naturally located at a throat portion, which is a boundary between the first flow path 111A and the second flow path 111B. Therefore, the rupture region of the venting disk is located at the throat portion of the gas discharge flow path where the pressure change is not significant, preventing unintentional rupture of the venting disk. In addition, in the present embodiment, the bracket member 110 is formed as a first bracket 110A having a first flow path 111A and a second bracket 110B having a second flow path 111B, respectively, which has the advantage of making it easier to manufacture the bracket compared to processing both the first and second flow paths of a complex shape on a single bracket member as shown in FIGS. 3 and 4. That is, the first bracket 110A only needs to be processed to have a first flow path with a decreasing flow path cross-sectional area, and the second bracket 11B only needs to be processed to have a second flow path with an increasing flow path cross-sectional area, thus simplifying the bracket processing work. Furthermore, the first bracket and the second bracket can be made to contact the two sides of the venting disk on the opposite sides, and a fastening member can be fastened to this contacting part, so that the venting disk can be more stably and firmly coupled to the bracket member.

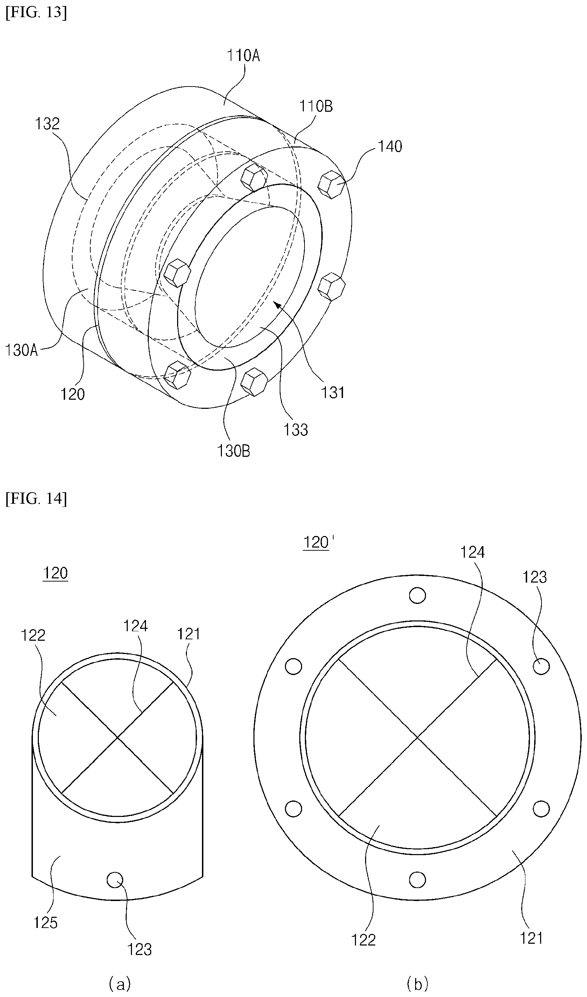

FIG. 12 shows a fastening structure for a gas venting device according to another exemplary embodiment of the present invention, and FIG. 13 is a perspective view illustrating an assembly structure of a gas venting device according to another exemplary embodiment of the present invention.

The embodiments 500, 600 of FIG. 12 form the bracket member 110 into two, first and second brackets 110A, 110B, as in FIG. 11, and also introduce two discharge guides 130A, 130B as in FIG. 10.

Referring to FIG. 12, the bracket member 110 includes a first bracket 110A and a second bracket 110B, each having a through hole, and a first discharge guide 130A having a first flow path 131A formed therethrough is inserted in the through hole of the first bracket 110A, and a second discharge guide 130B having a second flow path 131B formed therethrough is inserted in the through hole of the second bracket 110B.

In this embodiment, the bracket member and the discharge guide are each divided, making it easier to process the parts and making it easier to couple the venting disks.

That is, by coupling the first discharge guide 130A to the through hole of the first bracket 110A, the second discharge guide 130B to the through hole of the second bracket 110B, and then positioning the venting disk 120 between the first and second discharge guides and coupling with a fastening member 140, the venting disk can be stably coupled to the bracket member and the discharge guide with a larger coupling surface. In addition, the venting disk, the discharge guide, and the bracket member can be fastened together by a single fastening member, making it easier to perform the fastening operation.

The discharge guide 130 may form a fastening portion 135 on its outer peripheral surface for fastening the discharge guide to the bracket member.

For example, the first and second brackets 110A,110B and first and second discharge guides 130A,130B may be fastened by a fastening member 140, such as bolts. In this case, as shown in FIG. 12(a), a fastening member 135 may be protruding on the outer peripheral surface of the first and second discharge guides 130A, 130B for fastening each discharge guide to the respective bracket 110A, 110B. The first and second discharge guides 130A, 130B are to be inserted into the through holes in the first and second brackets 110A, 110B, respectively, so that their cross-sections correspond to the shape of the through holes, and the fastening portion 135 may form plate-type protrusions protruding along its outer peripheral portions in a shape similar to the outer periphery of the venting disk 120. In this embodiment, the fastening portion 135 may be formed on both the first discharge guide 130A and the second discharge guide 130B. In the fastening portion 135, a fastening hole (not shown) for bolting together with the first and second brackets 110A, 110B is formed, wherein the fastening hole formed in the fastening portion 135 is formed in the same position as the fastening hole formed in the first and second brackets 110A, 110B, and is fixed by inserting a bolt.

Meanwhile, the positions at which the fastening portions 135 are formed may be suitably designed. For example, as shown in FIG. 12(a), the fastening portion 135 formed on the first discharge guide 130A and the second discharge guide 130B may be formed to be positioned between the first bracket 110A and the venting disk 120 and between the second bracket 110B and the venting disk 120, respectively. However, the position of the fastening portion 135 is not limited to this, and for example, the fastening portion 135 may be formed to contact the other side of the side on which the first and second brackets 110A, 110B contact the venting disk 120.

In addition, as shown in FIG. 12(b), the fastening portion of the discharge guide may be screw-shaped fastening portion formed along the outer peripheral surface. In this case, the first bracket 110A and the second bracket 110B and the first and second discharge guides 130A,130B may be fastened in a screw fastening. That is, threads 116,136 for screwing may be correspondingly formed on the inner wall of the through hole of the first bracket 110A and the second bracket 110B and on the outer peripheral surface of the first and second discharge guides 130A,130B, respectively, so that the first and second brackets 110A and 110B and the first and second discharge guides 130A,130B may be fastened in the same manner as nuts and bolts are fastened. The threads may be formed on both the first discharge guide 130A and the second discharge guide 130B. In this way, when the discharge guides 130 are fastened to the brackets 110A, 110B in a screw fastening method, the structure and fastening method of the parts are simplified, and the first and second discharge guides 130A, 130B can be strongly fixed to the bracket member 110. However, even in this case, a separate fastening member is required to fasten the first and second brackets and the venting disk disposed therebetween.

The shape of the gas discharge flow path formed in the bracket member or the discharge guide can be designed in various forms depending on the safety standards of the battery pack, etc.

In addition, the cross-sectional area of the throat portion T of the gas discharge flow paths 111,131 may be appropriately selected according to the structure of the battery module and battery pack or the safety conditions to be achieved, but may be between 20% and 80% of the cross-sectional area of the inlet of the gas discharge flow path (inlet 112, 132 of the first flow path). More specifically, the cross-sectional area of the throat portion may be 20% to 40%, or 40% to 60%, or 60% to 80%, or even more specifically, 55% to 65% of the cross-sectional area of the inlet.

The cross-sectional area of the outlet of the gas discharge flow path (outlet 113,133 of the second flow path) may be the same as or different from the cross-sectional area of the inlet.

Meanwhile, patterns (not shown) may be formed on the inner walls of the gas discharge flow paths 111,131 to aid in gas discharge. For example, the pattern may be threaded, embossed, or protruded with a pattern of linear lines parallel to the gas discharge direction. Specifically, the pattern may be in the form of threaded protrusions along the inner wall of the flow path that wrap around the inside of the flow path. Such a pattern may facilitate the discharge of the gas.

FIG. 14 is a schematic diagram illustrating the shape of a venting disk according to the present invention.

FIG. 14(a) illustrates a venting disk 120 in a form that inserts into a slot formed in the bracket member of FIGS. 3 and 4, or in the discharge guide of FIG. 9, and FIG. 14(b) illustrates a venting disk 120' that is fastened between a plurality of brackets and the discharge guide as shown in FIG. 12.

Referring to FIG. 14(a), the venting disk 120 includes a disk outer peripheral portion 121 that is fastened to the bracket member 110; and a disk inner peripheral portion 122 that is formed integrally with the disk outer peripheral portion 121, shields the through hole, but ruptures when a predetermined pressure is applied. At the lower part of the outer peripheral portion of the venting disk, an outer peripheral portion extension 125 is formed, and a fastening hole 123 is formed in the outer peripheral portion extension 125.

Specifically, the entirety of the venting disk 120 is inserted into a slot formed in the bracket member (FIG. 4) or the venting guide (FIG. 9), wherein a portion of the outer peripheral portion of the upper side of the venting disk is inserted into a slot (insertion groove) in the inner wall of the gas discharge flow path throat portion formed in the bracket member or the venting guide. Subsequently, the outer peripheral portion extension of the venting disk is coupled to the bracket member or the venting guide by a fastening member 140.

The venting disk 120' of FIG. 14(b) includes a disk outer peripheral portion 121 that is fastened to the first bracket 110A and the second bracket 110B; and a disk inner peripheral portion 122 that is integrally formed with the disk outer peripheral portion 121, shields the through hole, but ruptures when a predetermined pressure is applied. The venting disk 120' of FIG. 14(b) is disposed concentrically with the bracket member or the venting guide within the gas venting device.

The disk inner peripheral portion 122 may be made of a metal or plastic material that is capable of rupture when a predetermined pressure is applied. For example, the disk inner peripheral portion 122 may be formed of a metal or plastic material such as copper, aluminum, or stainless steel with a small thickness. In case of rupture, the disk inner peripheral portion 122 may be suitably selected to match the pressure conditions.

Under normal conditions, the disk inner peripheral portion 122 prevents moisture or foreign matter from penetrating into the interior of the battery module or battery pack by blocking the through holes formed in the bracket member or the first bracket 110A and the second bracket 110B. However, when a large amount of gas is generated in the battery module or battery pack, the internal pressure rises, and this pressure acts as a force to rupture the disk inner peripheral portion 122. At this time, the pressure inside the battery module or battery pack is higher than the air pressure outside, so the gas inside can be discharged to the outside of the battery module or battery pack by negative pressure.

In the disk outer peripheral portion 121 of FIG. 14(b), a fastening hole 123 is formed in the circumferential direction to allow the venting disk to be coupled to the bracket member via a corresponding fastening hole of the bracket member.

A notch 124 are formed in the disk inner peripheral portion 122 to rupture when a predetermined pressure is applied. This notch 124 is formed by partially cutting the surface of the venting disk 120 in the thickness direction. The shape of the notch 124 can be designed as a cross shape, a circular shape, a quadrilateral shape, a U-shape, an oval shape, an arc shape, or the like, and the cross-section of the notch 124 can be a trapezoid, a V-shape, a quadrilateral shape, an arc, or the like. The shape of the notch 124 formed in the disk inner peripheral portion 122 is not necessarily limited thereto and may have various shapes. For example, the shape of the notch 124 may be an X-shape, as shown in FIG. 14. In this case, when the disk inner peripheral portion 122 ruptures, the rupture fragment of the inner circumference of the disk 122 may not completely break off and may be coupled to the disk outer peripheral portion 121. If the rupture fragment of the disk inner peripheral portion completely separates from the venting disk and falls off, it can be difficult to remove and can damage other components.

In addition, referring to FIG. 12, at least one among between the first bracket 110 and the venting disk 120 and between the second bracket 120 and the venting disk 120 may be interposed with a disk pad (not shown). These disk pads have a shape corresponding to the disk outer peripheral portion 131, and may be annular or ring-shaped. The disk pad is intended to increase the airtightness between the first bracket 110 and the venting disk 120, or between the second bracket 120 and the venting disk 120, and to prevent damage of the disk outer peripheral portion 132. For example, the disk pad may be formed of an elastic rubber material or the like.

In addition, the present invention provides a battery module that includes the gas venting device described above.

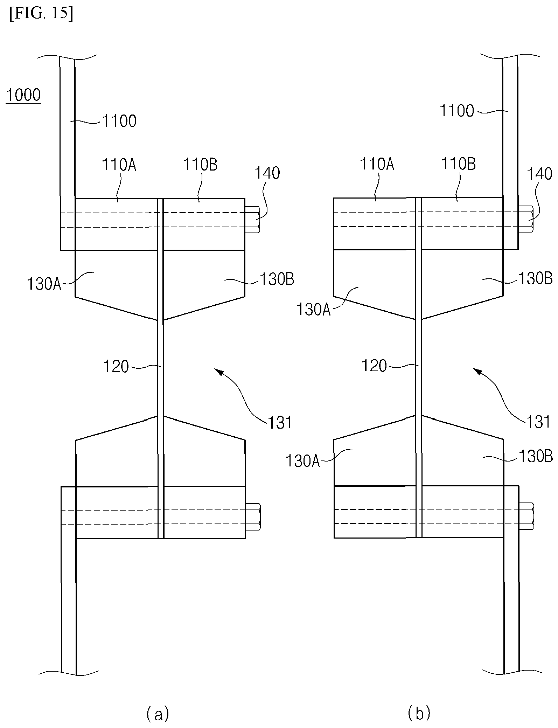

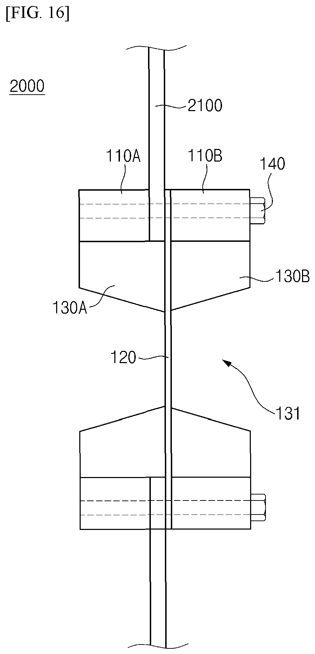

FIG. 15 is a schematic diagram illustrating a coupling structure of a gas venting device in a battery module 1000 according to an exemplary embodiment of the present invention, and FIG. 16 is a schematic diagram illustrating of a coupling structure of a gas venting device in a battery module 2000 according to another exemplary embodiment of the present invention.

Referring to FIGS. 15 and 16, a battery module 1000,2000 according to the present invention includes a plurality of secondary batteries (not shown); and a module frame 1100,2100 on which the secondary batteries are mounted, wherein a gas venting device 500,600 is fastened to one side of the module frame 1100,2100.

Specifically, the secondary battery has a form in which an electrode assembly with alternately stacked positive electrodes, negative electrodes, and separators is mounted within a cell case with an electrolyte. The configuration of such a secondary battery is obvious to a person of ordinary skill in the art to which the present invention belongs, and a more detailed description is therefore omitted.

In one example, the gas venting device 500,600 may be fastened with the first bracket 110A or second bracket 110B abutting the module frame 1100, as shown in FIG. 15. The present embodiment is illustrating a gas venting device with two separate brackets and venting guides is fastened to a module frame. However, other embodiments of the gas venting device described above with a single bracket member and venting guide, or with a single bracket member and separate venting guide, may also be coupled to the module frame.

In this case, the first bracket 110A is fastened while contacting the outer surface of the module frame 1100, as shown in FIG. 15(a), or the second bracket 110B is fastened while contacting the inner surface of the module frame 1100, as shown in FIG. 15(b). In the specification of the present invention, the inner surface of the module frame 1100 refers to the surface of the module frame 1100 facing the interior space in which the secondary battery is mounted, and the outer surface refers to the surface of the module frame 1100 exposed to the outside. In the module frame 1100, the first bracket 110A, the second bracket 110B, a fastening hole formed in a fastening portion (not shown) of the first and second discharge guides 130A,130B, and a hole corresponding to the fastening hole (bolt through holes) of the venting disk 120 are formed, so that the first bracket 110A, the venting disk 120, the first and second discharge guides 130A,130B, and the second bracket 110B can be fixed to the module frame 1100 through a single bolt fastening. Furthermore, the module frame 1100 may have a hole with a size corresponding to the through hole formed in the first and second brackets 110A, 110B, or an inlet of the gas discharge flow path 131 formed in the first and second discharge guides 130A,130B, so that the gas generated in the module may be discharged.

As shown in FIG. 16, in the battery module 2000, the gas venting devices 500,600 may be fastened with the module frame 2100 interposed between the first bracket 110A and the second bracket 110B. Specifically, as shown in FIG. 16, the gas venting device may be fastened with the first bracket 110A contacting an inner surface of the module frame 2100 and the second bracket 110B contacting an outer surface of the module frame 2100. In this case, the venting disk 120 may be fastened between the first bracket 110A and the module frame 2100 or between the second bracket 110B and the module frame 2100. If the discharge guide is formed with a fastening portion, the venting disk is positioned between the fastening portion and the module frame.

Meanwhile, the battery module 2000 may further include a sealing member (not shown) that provides a seal between the module frame 2100 and the periphery of the gas venting device 500,600. The sealing member may be a rubber ring or silicone resin, and may be installed in the gap between the gas venting device and the module frame to seal the battery module.

In addition, the present invention provides a battery pack including a gas venting device as previously described.

A battery pack according to the invention includes: at least one battery module having a plurality of secondary batteries; and a battery pack case in which the battery module is mounted, wherein one side of the battery pack case may be fastened with a gas venting device as previously described.

In this case, the gas venting device may be fastened to the battery pack case in the same manner as the coupling of the module frame to the gas venting device described above.

Similarly, the battery pack may include a sealing member that seals the battery pack case and the outer periphery of the gas venting device.

According to the above, the gas venting device according to the present invention, and the battery module and the battery pack equipped with it has a sealed inside, so that when the pressure inside exceeds a reference value, the venting disk ruptures and the gas inside the battery pack is discharged to the outside.

The present invention adopts two consecutive flow paths in which the cross-sectional area of the gas discharge flow path is continuously reduced in the gas discharge direction and then increased again. Accordingly, this overcomes the conventional limitation in which a choking phenomenon occurs due to the outlet flow rate being only subsonic, and the outlet flow rate of the gas discharge flow path can be made to be supersonic or higher, so that a larger flow rate of gas can be discharged.

In addition, as described above, the flow stability of the gas at the outlet is greatly improved, and the occurrence of shock waves can be reduced or prevented.

While the present invention has been particularly described with reference to exemplary embodiments, it will be understood by those of skilled in the art that various changes in form and details may be made without departing from the scope of the present invention. Therefore, the embodiments disclosed above and in the accompanying drawings should be considered in a descriptive sense only and not for purposes of limitation. The scope of the present invention is defined not by the detailed description of the present invention but by the appended claims.

Meanwhile, in this specification, terms indicating directions such as up, down, left, right, front, and back are used, and it should be clear that these terms are for convenience of description only, and may vary depending on the position of the object or the position of the observer.

## Claims

1. A gas venting device (100, 200, 300, 400, 500, 600) comprising:
a hollow bracket member (110) having a gas discharge flow path (111, 131); and
a venting disk (120, 120') coupled to the bracket member (110) to shield the gas discharge flow path (111, 131), and configured to rupture when a predetermined pressure is applied to the venting disk (120, 120');
wherein the gas discharge flow path (111, 131) comprises:
a first flow path (111A, 131A) that continuously decreases in a cross-sectional area of the flow path (111, 131) along the gas discharge direction,
a second flow path (111B, 131B) formed consecutively with the first flow path (111A, 131A) and having a cross-sectional area of the flow path (111, 131) continuously increased along the gas discharge direction,
**characterised in that**
the venting disk (120, 120') is inserted across a throat portion (T) of the gas discharge flow path (111, 131), which is a boundary portion of the first flow path (111A, 131A) and the second flow path (111B, 131B).

2. The gas venting device (100, 200, 300, 400, 500, 600) of claim 1, wherein
the first flow path (111A, 131A) and the second flow path (111B, 131B) have the same or different lengths.

3. The gas venting device (100, 200, 300, 400, 500, 600) of claim 1, wherein
cross-sectional profiles of both side portions of the first flow path (111A, 131A) are formed in a tapered shape approaching each other along the gas discharge direction, and
cross-sectional profiles of the both side portions of the second flow path (111B, 131B) are formed in a tapered shape moving away from each other along the gas discharge direction.

4. The gas venting device (100, 200, 300, 400, 500, 600) of claim 3, wherein
a slope of the tapered shape of the first flow path (111A, 131A) and a slope of the tapered shape of the second flow path (111B, 131B) are the same or different.

5. The gas venting device (100, 200, 300, 400, 500, 600) of claim 3, wherein
the cross-sectional profiles of the two sides of the first and second flow paths (111B, 131B) are formed in a linear or curved tapered shape.

6. The gas venting device (100, 200, 300, 400, 500, 600) of claim 5, wherein
the first flow path (111A, 131A) has a first truncated conical shape in which the cross-sectional profiles of both side portions are formed in a linear or curved tapered shape, and
the second flow path (111B, 131B) has a second truncated conical shape in which the cross-sectional profiles of the two sides are formed in a linear or curved tapered shape.

7. The gas venting device (100, 200, 300, 400, 500, 600) of claim 3, wherein
the first flow path (111A, 131A) has a first truncated pyramid (111E) shape in which the cross-sectional profiles of both side portions are formed in a tapered shape, and
the second flow path (111B, 131B) has a second truncated pyramid (111F) shape in which the cross-sectional profiles of both side portions are formed in a tapered shape.

8. The gas venting device (100, 200, 300, 400, 500, 600) of claim 7, wherein
the first truncated pyramid (111E) and the second truncated pyramid (111F) has a truncated square pyramid shape having a trapezoidal cross-sectional profile.

9. The gas venting device (100, 200, 300, 400, 500, 600) of claim 1, wherein
a flow path (111, 131) having a linear cross-sectional profile on both sides is connected to the inlet side of the first flow path (111A, 131A).

10. The gas venting device (100, 200, 300, 400, 500, 600) of claim 1, wherein
the bracket member (110) has a through hole, and comprises a discharge guide (130) inserted within the through hole and having a gas discharge flow path (111, 131) formed therethrough.

11. The gas venting device (100, 200, 300, 400, 500, 600) of claim 10, wherein
the discharge guide (130) comprises a first discharge guide (130A) inserted into the through hole and having a first flow path (111A, 131A) formed through it, and a second discharge guide (130B) inserted into the through hole and having a second flow path (111B, 131B) formed through it,
wherein the venting disk (120, 120') is coupled between the first discharge guide (130A) and the second discharge guide (130B) to shield the gas discharge flow path (111, 131).

12. The gas venting device (100, 200, 300, 400, 500, 600) of claim 10, wherein
a fastening portion (135) is formed on the outer peripheral surface of the discharge guide (130) for fastening the discharge guide (130) to the bracket member (110).

13. The gas venting device (100, 200, 300, 400, 500, 600) of claim 1, wherein
the bracket member (110) comprises:
a first bracket (110A) located at the inlet side of the gas discharge flow path (111, 131) and having the first flow path (111A, 131A), and
a second bracket (110B) located at the outlet side of the gas discharge flow path (111, 131) and having the second flow path (111B, 131B), wherein
the venting disk (120, 120') is coupled between the first bracket (110A) and the second bracket (110B) to shield the gas discharge flow path (111, 131).

14. The gas venting device (100, 200, 300, 400, 500, 600) of claim 13, wherein
the first bracket (110A) and the second bracket (110B) each has a through hole,
wherein a first discharge guide (130A) having a first flow path (111A, 131A) is inserted into the through hole of the first bracket (110A), and
a second discharge guide (130B) having a second flow path (111B, 131B) is inserted into the through hole of the second bracket (110B).

15. The gas venting device (100, 200, 300, 400, 500, 600) of claim 1, wherein
the venting disk (120, 120') comprises:
a disk outer peripheral portion (121) coupled to the bracket member (110); and
a disk inner peripheral portion (122) formed in one piece with the disk outer peripheral portion (121), shielding the gas discharge flow path (111, 131), and rupturing when a predetermined pressure is applied to the disk inner peripheral portion (122); wherein
a notch (124) is formed in the disk inner peripheral portion (122) to rupture when the predetermined pressure is applied to the disk inner peripheral portion (122).

16. A battery module (1000, 2000) comprising:
a plurality of secondary batteries; and
a module frame (1100, 2100) on which the plurality of secondary batteries are mounted,
wherein a gas venting device (100, 200, 300, 400, 500, 600) according to any one of claims 1 to 15 is coupled to one side of the module frame (1100, 2100).

17. The battery module (1000, 2000) of claim 16, further comprising
a sealing member providing an airtight seal between the module frame (1100, 2100) and the outer periphery of the gas venting device (100, 200, 300, 400, 500, 600).

18. A battery pack comprising:
at least one battery module (1000, 2000) having a plurality of secondary batteries; and a battery pack case in which the battery module (1000, 2000) is mounted;
wherein a gas venting device (100, 200, 300, 400, 500, 600) according to any one of claims 1 to 15 is coupled to one side of the battery pack case.

## Patentansprüche

1. Gasentlüftungsvorrichtung (100, 200, 300, 400, 500, 600) aufweisend:
ein hohles Halterungselement (110) mit einem Gasauslassströmungspfad (111, 131); und
eine Entlüftungsscheibe (120, 120'), die mit dem Halterungselement (110) gekoppelt ist, um den Gasauslassströmungspfad (111, 131) abzuschirmen, und konfiguriert ist, um aufzubrechen, wenn ein vorbestimmter Druck auf die Entlüftungsscheibe (120, 120') ausgeübt wird;
wobei der Gasauslassströmungspfad (111, 131) aufweist:
einen ersten Strömungspfad (111A, 131A), der in einer Querschnittsfläche des Strömungspfads (111, 131) entlang der Gasauslassrichtung kontinuierlich abnimmt,
einen zweiten Strömungspfad (111B, 131B), der nacheinander mit dem ersten Strömungspfad (111A, 131A) ausgebildet ist und eine Querschnittsfläche des Strömungspfads (111, 131) aufweist, die entlang der Gasauslassrichtung kontinuierlich zunimmt,
**dadurch gekennzeichnet, dass**
die Entlüftungsscheibe (120, 120') über einen Halsabschnitt (T) des Gasauslassströmungspfads (111, 131) eingesetzt ist, der ein Grenzabschnitt des ersten Strömungspfads (111A, 131A) und des zweiten Strömungspfads (111B, 131B) ist.

2. Gasentlüftungsvorrichtung (100, 200, 300, 400, 500, 600) nach Anspruch 1, wobei
der erste Strömungspfad (111A, 131A) und der zweite Strömungspfad (111B, 131B) die gleiche oder unterschiedliche Längen aufweisen.

3. Gasentlüftungsvorrichtung (100, 200, 300, 400, 500, 600) nach Anspruch 1, wobei
Querschnittsprofile beider Seitenabschnitte des ersten Strömungspfads (111A, 131A) in einer sich verjüngenden Form ausgebildet sind, die sich entlang der Gasauslassrichtung einander annähern, und
Querschnittsprofile der beiden Seitenabschnitte des zweiten Strömungspfads (111B, 131B) in einer sich verjüngenden Form ausgebildet sind, die sich entlang der Gasauslassrichtung voneinander weg bewegen.

4. Gasentlüftungsvorrichtung (100, 200, 300, 400, 500, 600) nach Anspruch 3, wobei
eine Neigung der sich verjüngenden Form des ersten Strömungspfads (111A, 131A) und eine Neigung der sich verjüngenden Form des zweiten Strömungspfads (111B, 131B) gleich oder unterschiedlich sind.

5. Gasentlüftungsvorrichtung (100, 200, 300, 400, 500, 600) nach Anspruch 3, wobei
die Querschnittsprofile der zwei Seiten des ersten und des zweiten Strömungspfads (111B, 131B) in einer linearen oder gekrümmten, sich verjüngenden Form ausgebildet sind.

6. Gasentlüftungsvorrichtung (100, 200, 300, 400, 500, 600) nach Anspruch 5, wobei
der erste Strömungspfad (111A, 131A) eine erste kegelstumpfförmige Form aufweist, in der die Querschnittsprofile beider Seitenabschnitte in einer linearen oder gekrümmten, sich verjüngenden Form ausgebildet sind, und
der zweite Strömungspfad (111B, 131B) eine zweite kegelstumpfförmige Form aufweist, in der die Querschnittsprofile der zwei Seiten in einer linearen oder gekrümmten, sich verjüngenden Form ausgebildet sind.

7. Gasentlüftungsvorrichtung (100, 200, 300, 400, 500, 600) nach Anspruch 3, wobei
der erste Strömungspfad (111A, 131A) eine erste Pyramidenstumpfform (111E) aufweist, in der die Querschnittsprofile beider Seitenabschnitte in einer sich verjüngenden Form ausgebildet sind, und
der zweite Strömungspfad (111B, 131B) eine zweite Pyramidenstumpfform (111F) aufweist, in der die Querschnittsprofile beider Seitenabschnitte in einer sich verjüngenden Form ausgebildet sind.

8. Gasentlüftungsvorrichtung (100, 200, 300, 400, 500, 600) nach Anspruch 7, wobei
die erste Pyramidenstumpfform (111E) und die zweite Pyramidenstumpfform (111F) eine quadratische Pyramidenstumpfform mit einem trapezförmigen Querschnittsprofil aufweisen.

9. Gasentlüftungsvorrichtung (100, 200, 300, 400, 500, 600) nach Anspruch 1, wobei
ein Strömungspfad (111, 131) mit einem linearen Querschnittsprofil auf beiden Seiten mit der Einlassseite des ersten Strömungspfads (111A, 131A) verbunden ist.

10. Gasentlüftungsvorrichtung (100, 200, 300, 400, 500, 600) nach Anspruch 1, wobei
das Halterungselement (110) ein Durchgangsloch aufweist und eine Auslassführung (130) aufweist, die in das Durchgangsloch eingesetzt ist und einen Gasauslassströmungspfad (111, 131) aufweist, der dort hindurch ausgebildet ist.

11. Gasentlüftungsvorrichtung (100, 200, 300, 400, 500, 600) nach Anspruch 10, wobei
die Auslassführung (130) eine erste Auslassführung (130A), die in das Durchgangsloch eingesetzt ist und einen ersten Strömungspfad (111A, 131A) aufweist, der dort hindurch ausgebildet ist, und eine zweite Auslassführung (130B) aufweist, die in das Durchgangsloch eingesetzt ist und einen zweiten Strömungspfad (111B, 131B) aufweist, der dort hindurch ausgebildet ist,
wobei die Entlüftungsscheibe (120, 120') zwischen der ersten Auslassführung (130A) und der zweiten Auslassführung (130B) gekoppelt ist, um den Gasauslassströmungspfad (111, 131) abzuschirmen.

12. Gasentlüftungsvorrichtung (100, 200, 300, 400, 500, 600) nach Anspruch 10, wobei
ein Befestigungsabschnitt (135) an der Außenumfangsfläche der Auslassführung (130) zum Befestigen der Auslassführung (130) an dem Halterungselement (110) ausgebildet ist.

13. Gasentlüftungsvorrichtung (100, 200, 300, 400, 500, 600) nach Anspruch 1, wobei
das Halterungselement (110) aufweist:
eine erste Halterung (110A), die sich an der Einlassseite des Gasauslassströmungspfads (111, 131) befindet und den ersten Strömungspfad (111A, 131A) aufweist, und
eine zweite Halterung (110B), die sich an der Auslassseite des Gasauslassströmungspfads (111, 131) befindet und den zweiten Strömungspfad (111B, 131B) aufweist, wobei
die Entlüftungsscheibe (120, 120') zwischen der ersten Halterung (110A) und der zweiten Halterung (110B) gekoppelt ist, um den Gasauslassströmungspfad (111, 131) abzuschirmen.

14. Gasentlüftungsvorrichtung (100, 200, 300, 400, 500, 600) nach Anspruch 13, wobei
die erste Halterung (110A) und die zweite Halterung (110B) jeweils ein Durchgangsloch aufweisen,
wobei eine erste Auslassführung (130A) mit einem ersten Strömungspfad (111A, 131A) in das Durchgangsloch der ersten Halterung (110A) eingesetzt ist, und
eine zweite Auslassführung (130B) mit einem zweiten Strömungspfad (111B, 131B) in das Durchgangsloch der zweiten Halterung (110B) eingesetzt ist.

15. Gasentlüftungsvorrichtung (100, 200, 300, 400, 500, 600) nach Anspruch 1, wobei
die Entlüftungsscheibe (120, 120') aufweist:
einen Scheibenaußenumfangsabschnitt (121), der mit dem Halterungselement (110) gekoppelt ist; und
einen Scheibeninnenumfangsabschnitt (122), der einstückig mit dem Scheibenaußenumfangsabschnitt (121) ausgebildet ist, den Gasauslassströmungspfad (111, 131) abschirmt und aufbricht, wenn ein vorbestimmter Druck auf den Scheibeninnenumfangsabschnitt (122) ausgeübt wird; wobei
eine Kerbe (124) in dem Scheibeninnenumfangsabschnitt (122) ausgebildet ist, um aufzubrechen, wenn der vorbestimmte Druck auf den Scheibeninnenumfangsabschnitt (122) ausgeübt wird.

16. Batteriemodul (1000, 2000) aufweisend:
mehrere Sekundärbatterien; und
einen Modulrahmen (1100, 2100), an dem die mehreren Sekundärbatterien montiert sind,
wobei eine Gasentlüftungsvorrichtung (100, 200, 300, 400, 500, 600) nach einem der Ansprüche 1 bis 15 mit einer Seite des Modulrahmens (1100, 2100) gekoppelt ist.

17. Batteriemodul (1000, 2000) nach Anspruch 16, ferner aufweisend
ein Dichtungselement, das eine luftdichte Dichtung zwischen dem Modulrahmen (1100, 2100) und dem Außenumfang der Gasentlüftungsvorrichtung (100, 200, 300, 400, 500, 600) bereitstellt.

18. Batteriepack aufweisend:
mindestens ein Batteriemodul (1000, 2000) mit mehreren Sekundärbatterien; und ein Batteriepackgehäuse, in dem das Batteriemodul (1000, 2000) montiert ist;
wobei eine Gasentlüftungsvorrichtung (100, 200, 300, 400, 500, 600) nach einem der Ansprüche 1 bis 15 mit einer Seite des Batteriepackgehäuses gekoppelt ist.

## Revendications

1. Dispositif d'évacuation du gaz (100, 200, 300, 400, 500, 600) comprenant :
un élément de support creux (110) doté d'un conduit d'écoulement du gaz évacué (111, 131) ; et
un disque d'évacuation (120, 120') couplé à l'élément de support (110) pour protéger le conduit d'écoulement du gaz évacué (111, 131), et configuré pour se rompre lors de l'application d'une pression prédéterminée sur le disque d'évacuation (120, 120') ;
le conduit d'écoulement du gaz évacué (111, 131) comprenant :
un premier conduit d'écoulement (111A, 131A), la surface en coupe transversale du conduit d'écoulement (111, 131) diminuant continuellement dans le sens de l'évacuation du gaz,
un deuxième conduit d'écoulement (111B, 131B) formé consécutivement avec le premier conduit d'écoulement (111A, 131A), la surface en coupe transversale du conduit d'écoulement (111, 131) augmentant en continu dans le sens de l'évacuation du gaz,
**caractérisé en ce que**
le disque d'évacuation (120, 120') est inséré à travers une partie de gorge (T) du conduit d'écoulement de l'évacuation du gaz (111, 131), qui est une partie limite du premier conduit d'écoulement (111A, 131A) et du deuxième conduit d'écoulement (111B, 131B).

2. Dispositif d'évacuation du gaz (100, 200, 300, 400, 500, 600) selon la revendication 1,
le premier conduit d'écoulement (111A, 131A) et le deuxième conduit d'écoulement (111B, 131B) ayant la même longueur ou une longueur différente.

3. Dispositif d'évacuation du gaz (100, 200, 300, 400, 500, 600) selon la revendication 1,
des profils transversaux des deux parties latérales du premier conduit d'écoulement (111A, 131A) étant formés sous une forme effilée les rapprochant l'un de l'autre dans le sens de l'évacuation du gaz, et
des profils transversaux des deux parties latérales du deuxième conduit d'écoulement (111B, 131B) étant formés sous une forme effilée les éloignant l'un de l'autre dans le sens de l'évacuation du gaz.

4. Dispositif d'évacuation du gaz (100, 200, 300, 400, 500, 600) selon la revendication 3,
une inclinaison de la forme effilée du premier conduit d'écoulement (111A, 131A) et une inclinaison de la forme effilée du deuxième conduit d'écoulement (111B, 131B) étant les mêmes ou différentes.

5. Dispositif d'évacuation du gaz (100, 200, 300, 400, 500, 600) selon la revendication 3,
les profils transversaux des deux côtés du premier et du deuxième conduit d'écoulement (111B, 131B) étant formés sous une forme effilée linéaire ou incurvée.

6. Dispositif d'évacuation du gaz (100, 200, 300, 400, 500, 600) selon la revendication 5,
le premier conduit d'écoulement (111A, 131A) présentant une première forme tronconique dans laquelle les profils transversaux des deux parties latérales sont formés sous une forme effilée linéaire ou incurvée, et
le deuxième conduit d'écoulement (111B, 131B) présentant une deuxième forme tronconique dans laquelle les profils transversaux des deux côtés sont formés sous une forme effilée linéaire ou incurvée.

7. Dispositif d'évacuation du gaz (100, 200, 300, 400, 500, 600) selon la revendication 3,
le premier conduit d'écoulement (111A, 131A) présentant une première forme de pyramide tronquée (111E) dans laquelle les profils transversaux des deux parties latérales sont formés sous une forme effilée, et
le deuxième conduit d'écoulement (111B, 131B) présentant une deuxième forme de pyramide tronquée (111F) dans laquelle les profils transversaux des deux côtés sont formés avec une forme effilée.

8. Dispositif d'évacuation du gaz (100, 200, 300, 400, 500, 600) selon la revendication 7,
la première pyramide tronquée (111E) et la deuxième pyramide tronquée (111F) présentant une forme de pyramide carrée tronquée dotée d'un profil transversal trapézoïdal.

9. Dispositif d'évacuation du gaz (100, 200, 300, 400, 500, 600) selon la revendication 1,
un conduit d'écoulement (111, 131) présentant un profil transversal linéaire sur les deux côtés étant connecté au côté d'entrée du premier conduit d'écoulement (111A, 131A).

10. Dispositif d'évacuation du gaz (100, 200, 300, 400, 500, 600) selon la revendication 1,
l'élément de support (110) possédant un trou traversant, comprenant un guide d'évacuation (130) inséré dans le trou traversant, et étant doté d'un conduit d'écoulement d'évacuation du gaz (111, 131) formé à travers celui-ci.

11. Dispositif d'évacuation du gaz (100, 200, 300, 400, 500, 600) selon la revendication 10,
le guide d'évacuation (130) comprenant un premier guide d'évacuation (130A) inséré dans le trou traversant, et possédant un premier conduit d'écoulement (111A, 131A) formé à travers celui-ci, et un deuxième guide d'évacuation (130B) inséré dans le trou traversant, et possédant un deuxième conduit d'écoulement (111B, 131B) formé à travers celui-ci,
le disque d'évacuation (120, 120') étant couplé entre le premier guide d'évacuation (130A) et le deuxième guide d'évacuation (130B) pour protéger le conduit d'écoulement d'évacuation du gaz (111, 131).

12. Dispositif d'évacuation du gaz (100, 200, 300, 400, 500, 600) selon la revendication 10,
une partie de fixation (135) étant formée sur la surface périphérique extérieure du guide d'évacuation (130) pour la fixation du guide d'évacuation (130) sur l'élément de support (110).

13. Dispositif d'évacuation du gaz (100, 200, 300, 400, 500, 600) selon la revendication 1,
l'élément de support (110) comprenant :
un premier support (110A) situé sur le côté entrée du conduit d'écoulement d'évacuation du gaz (111, 131), et doté du premier conduit d'écoulement (111A, 131A), et
un deuxième support (110B) situé sur le côté sortie du conduit d'écoulement d'évacuation du gaz (111, 131), et doté du deuxième conduit d'écoulement (111B, 131B),
le disque d'évacuation (120, 120') étant couplé entre le premier support (110A) et le deuxième support (110B) pour protéger le conduit d'écoulement d'évacuation du gaz (111, 131).

14. Dispositif d'évacuation du gaz (100, 200, 300, 400, 500, 600) selon la revendication 13,
le premier support (110A) et le deuxième support (110B) possédant chacun un trou traversant,
un premier guide d'évacuation (130A) possédant un premier conduit d'écoulement (111A, 131A) étant inséré dans le trou traversant du premier support (110A), et
un deuxième guide d'évacuation (130B) possédant un deuxième conduit d'écoulement (111B, 131B) étant inséré dans le trou traversant du deuxième support (110B).

15. Dispositif d'évacuation du gaz (100, 200, 300, 400, 500, 600) selon la revendication 1,
le disque d'évacuation (120, 120') comprenant :
une partie périphérique extérieure du disque (121) couplée à l'élément de support (110) ; et
une partie périphérique intérieure du disque (122) formée d'une seule pièce avec la partie périphérique extérieure du disque (121), en protégeant le conduit d'écoulement d'évacuation du gaz (111, 131), et en se rompant lors de l'application d'une pression prédéterminée sur la partie périphérique intérieure du disque (122) ;
un cran (124) ayant été agencé dans la partie périphérique intérieure du disque (122) pour assurer sa rupture lors de l'application d'une pression prédéterminée sur la partie périphérique intérieure du disque (122).

16. Module de batterie (1000, 2000) comprenant :
une pluralité de batteries secondaires ; et
un châssis de module (1100, 2100) sur lequel sont montées la pluralité de batteries secondaires,
un dispositif d'évacuation du gaz (100, 200, 300, 400, 500, 600) selon une quelconque des revendications 1 à 15 étant couplé à un côté du châssis de module (1100, 2100).

17. Module de batterie (1000, 2000) selon la revendication 16, comprenant en outre :
un élément de scellement effectuant une fermeture hermétique entre le châssis de module (1100, 2100) et le pourtour extérieur du dispositif d'évacuation du gaz (100, 200, 300, 400, 500, 600).

18. Bloc-batterie comprenant :
au moins un module de batterie (1000, 2000) possédant une pluralité de batteries secondaires ; et
un boîtier de bloc-batterie dans lequel est monté le module de batterie (1000, 2000) ;
un dispositif d'évacuation du gaz (100, 200, 300, 400, 500, 600) selon une quelconque des revendications 1 à 15 étant couplé à un côté du boîtier de bloc-batterie.
